# EUROPÄISCHE PATENTSCHRIFT

(11) **EP 1 697 430 B1**
(45) Veröffentlichungstag und Bekanntmachung des Hinweises auf die Patenterteilung: **01.04.2009**
(21) Anmeldenummer: 04820415.0
(22) Anmeldetag: 03.12.2004
(51) Int. Cl.: C08F 16/06, B23K 35/00, C08K 3/00

(54) **FLUSSMITTEL**
FLUXING AGENT
FONDANT

(30) Priorität: 17.12.2003 DE 10359222
(43) Veröffentlichungstag der Anmeldung: 06.09.2006
(73) Patentinhaber: Solvay Fluor GmbH, 30173 Hannover (DE)
(72) Erfinder: SWIDERSKY, Hans-Walter, 30175 Hannover (DE); BORN, Thomas, 31188 Holle/Sottrum (DE)
(74) Vertreter: Jacques, Philippe
(86) Internationale Anmeldenummer: PCT/EP2004/013759
(87) Internationale Veröffentlichungsnummer: WO 2005/058985

(56) Entgegenhaltungen:
- WO-A-99/48641
- DE-A1- 1 930 683
- DE-A1- 10 108 330

## Beschreibung

Die Erfindung bezieht sich auf Flußmittel zum Löten von Aluminiumbauteilen sowie ein Verfahren zur Konfektionierung von Flußmitteln.

Baugruppen von Teilen aus Aluminium oder Aluminiumlegierungen oder in Kombination mit Teilen aus geeigneten anderen Materialien z. B. Kupfer, Messing, Eisen oder Edelstahl können durch Verlöten dieser Teile hergestellt werden.Techniken zum Verlöten dieser Bauteile sind bekannt. Die Bauteile werden unter Zuhilfenahme eines Lotmetalls und eines Flußmittels unter Erhitzen miteinander verbunden. Dabei kann man das Lotmetall entweder separat zusetzen oder man kann mit Lotmetall plattierte Bauteile einsetzen. Mit Vorteil verwendet man Flußmittel auf Basis komplexer Fluormetallate z. B. komplexe Alkalimetallfluoride, welche die Oberfläche der miteinander zu verlötenden Bauteile von oxidischen Anhaftungen befreien. Dabei wird das Flußmittel entweder trocken oder als Paste appliziert oder als wässrige Suspension auf die zu verbindenden Bauteile aufgesprüht oder die Bauteile werden in die Suspension getaucht.

Der Begriff "Flußmittel" umfaßt anwendungfertige Zusammensetzungen, welche neben dem Flußmittel gegebenenfalls Hilfsstoffe enthalten. Dabei kann das Flußmittel nur aus Flußmittel bestehen. Als Hilfsstoffe können in der Flußmittelzubereitung z. B. Bindemittel, Dispergiermittel, Lotmetall, Lotmetall-Vorstufen, lotbildende Materialien oder Stabilisatoren enthalten sein.

Flußmittel auf Basis komplexer Fluormetallate können z. B. Alkalimetallfluoraluminate, Alkalimetallfluorsilikate, Alkalimetallfluorzinkate sein. Wobei andere bekannte Flußmittel ebenfalls geeignet sind. Solche Flußmittel sind bekannt aus DE-A-10108330.

Die Fluorverbindungen können als reine Verbindung oder als Gemisch von Fluorverbindungen eingesetzt werden.

Wie bereits angeführt wird das Flußmittel bzw. die Flußmittelzubereitung trocken, als Paste oder in Form von wässrigen Suspensionen auf die zu verbindenden Bauteile aufgebracht.

Zur Herstellung der Suspension werden die Mischungskomponenten in Wasser suspendiert. Dabei kann es auf Grund der Beschaffenheit der Komponenten zu Staubbelästigungen oder zu Dosierungsfehlern kommen.

Zur Herstellung einer Paste wird das Flußmittel mit den Hilfstoffen und Trägersubstanzen z.B. organische Verbindungen vermischt, wobei die Viskosität der Zubereitung durch die Menge der Trägersubstanz gesteuert werden kann.

Aufgabe der vorliegende Erfindung ist es, ein Flußmittel bzw. eine Flußmittelzubereitung bereitzustellen, welche besser dosiert werden kann. Die Staubbelästigung bei der Herstellung einer Flußmittelsuspension soll vermieden werden, die Benetzbarkeit der zu verlötenden Bauteile mit dem Flußmittel und die Anhaftung des Flußmittels auf den Bauteilen soll verbessert werden.

Die Aufgabe wird dadurch gelöst, daß ein Flußmittel bzw. eine Flußmittelzubereitung auf Basis von komplexen Fluormetallaten erfindungsgemäß als wasserlösliches Polymer Polyvinylalkohol und/oder Polyvinylalkoholderivate enthält. Das wasserlösliche Polymer kann als Hüllstoff für das Flußmittel oder die Flußmittelzubereitung verwendet werden oder kann in Form von Granulat oder Pulver in das Flußmittel oder die Flußmittelzubereitung eingebracht werden. Das wasserlösliche Polymer kann beispielsweise als wasserlösliche Verpackung insbesondere als Verpackungsfolie verwendet werden.

Erfindungsgemäß enthält das Flußmittel bzw. die Flußmittelzubereitung das wasserlösliche Polymer in Mengen von 0,005 bis 10 Gew.-%, bezogen auf die Gesamtmenge des Flußmittels bzw. der Flußmittelzubereitung.

In einer Ausführungsform der Erfindung wird das Flußmittel mit den üblichen Hilfstoffen in einen Beutel aus wasserlöslicher Polymerfolie, vorzugsweise einem Beutel aus wasserlöslicher Polyvinylalkoholfolie verpackt und in die wässrige Suspension eingetragen. Es wurde eine Folie mit einer Stärke von z. B. 80 µm verwendet.

Polyvinylalkohol wird schon seit Jahrzehnten großtechnisch hergestellt. Auf Grund seiner Eigenschaften wird Polyvinylalkohol (PVA) z. B. als Appretur- oder Schlichtungsmittel, als Emulgator und als Schutzkolloid verwendet. Auf Grund der hohen Beständigkeit des PVA gegen organische Lösemittel werden aus ihm benzin- und lösemittelfeste Schläuche, Membranen, Dichtungen und Hohlkörper gefertigt.

PVA-Folien nehmen unter den Hüll- oder Verpackungsstoffen eine Sonderstellung ein, da sie sich beim Einbringen in Wasser auflösen. Wasserlösliche PVA-Folie stellt also lediglich einen Berührungsschutz bzw. eine Dosierungspackung dar.

Ihre Verwendungsmöglichkeiten und die Vorsichtsmaßnahmen, die bei der Lagerung und beim Transport von PVA-Packungen getroffen werden müssen, sind im Wesentlichen durch die gute Wasserlöslichkeit und das hygroskopische Verhalten der Folie bedingt.

PVA-Folie ist für Substanzen, die in wässriger Lösung zur Anwendung kommen ein ideales Verpackungsmaterial.

Eine ganze Reihe von Produkten werden bereits in PVA-Folie verpackt, z. B. Waschmittel, Reinigungsmittel oder landwirtschaftliche Chemikalien.

Wasserlösliche Folien können aus verschiedenen Typen von Polyvinylalkohol hergestellt werden, die sich durch ihren Verseifungs- und Polymerisationsgrad unterscheiden. Weiterhin können die Eigenschaften der Folie durch Art und Menge der zugesetzten Weichmacher beeinflußt werden. Aus der EP 283 180 sind wasserlösliche Filme auf Basis von Polyvinylalkoholen und zwar Vinylalkohol-Vinylacetat-Copolymere, welche teilweise mit Benzaldehydderivaten acetalisiert wurden, bekannt.

Es wurde gefunden, daß das Einbringen der wasserlöslichen Polymere als Verpackungsmaterial in die Flußmittelsuspension bzw. in Granulatform in eine pastöse Flußmittelformulierung keine nachteilige Auswirkung auf das Lötergebnis hat. Die Menge und Art des eingesetzten wasserlöslichen Polymers richtet sich nach der Art des Flußmittel bzw. der Flußmittelzubereitung. Bei einer Suspension ist das Volumen der Suspension und die Flußmittelkonzentration in der Suspension wesentlich, bei einer pastösen Zubereitung ist neben dem Volumen die gewünschte Viskosität und die Kenntnis der Wechselwirkung mit den Trägersubstanzen wesentlich. Es hat sich als günstig erwiesen, das wasserlösliche Polymer in einer Menge von 0,005 bis 10 Gew.-%; vorzugsweise von 0,1 bis 5 Gew.-%, insbesondere von 0,5 bis 2 Gew.-% (bezogen auf die Gesamtmenge) einzusetzen.

Es konnte festgestellt werden, daß durch die Zugabe des wasserlöslichen Polymers die Beschichtung der Bauteile mit dem Flußmittel sehr gleichmäßig ist. Die Benetzung der Bauteile mit dem Flußmittel wird verbessert. Das Flußmittel haftet besser auf den Bauteilen. Die Staubbelästigung bei der Herstellung der Zubereitungen wird reduziert bzw. tritt nicht mehr auf. Dosierungsfehler können minimiert bzw. sogar ausgeschlossen werden, da konkrete Verpackungsgrößen möglich sind.

Es ist weiterhin von Vorteil, daß durch die Zugabe der wasserlöslichen Polymere die Menge der Benetzungsmittel gesenkt werden kann. Als Benetzungsmittel werden üblicherweise Tenside eingesetzt. Ohne Benetzungsmittel, also ohne Tenside, würde sich die Flußmittelsuspension auf der Aluminiumoberfläche zusammenballen (Tröpfchenbildung auf Grund der Kohäsionskraft des Wassers). Nach der Trocknung wäre das Flußmittel nicht homogen auf der Metalloberfläche verteilt. Die Verwendung von Polyvinylalkohol bzw. Polyvinylalkoholderivaten hat den Vorteil, daß die Oberflächenspannung des Wassers reduziert werden kann, so daß im günstigsten Fall ein zusätzliches Benetzungsmittel überflüssig wird. Der Polyvinylalkohol bzw. die Polyvinylalkoholderivate wirken wie ein Tensid, sie sind biologisch abbaubar und es sind keine toxikologischen Wirkungen dieser Substanzen bekannt.

Es wurde gefunden, daß der PVA-Anteil so gering wie möglich gehalten werden sollte, sofern keine negative Auswirkung auf das Lötergebnis toleriert werden kann.

Es hat sich als günstig erwiesen, ein Verhältnis Polymer (als Verpackung) zu Flußmittel von 0,1 bis 5 Gew.-%, vorzugsweise von 0,5 bis 2 Gew.-% (bezogen auf die Gesamtmenge) einzuhalten, damit die Loteigenschaften nicht negativ beeinflußt werden. Ein zuviel an PVA-Verpackung kann zu Verfärbungen an der Lötstelle während des Lötprozesses führen.

Ein Verhältnis Polymer zu Suspensionsmenge von 0,005 bis 10 Gew.-% (bezogen auf Gesamtmenge) wirkt sich positiv auf das Benetzungsverhalten bzw. die Beaufschlagung der Bauteile mit dem Flußmittel aus. Und eine gleichmäßige Beschichtung wiederum führt zu verbesserten Lötergebnissen.

In einer anderen Ausführungsform wird das Flußmittel bzw. die Flußmittelzubereitung als Pastenformulierung auf die zu verlötenden Bauteile aufgetragen. In diesem Fall wird das wasserlösliche Polymer, vorzugsweise Polyvinylalkohol oder Polyvinylalkoholderivate in Granulatform oder als Pulver der Flußmittelzubereitung zugefügt.

Es wurde gefunden, daß bei einem Zusatz von 0,1 bis 5 Gew.-%, bezogen auf die Gesamtmenge der Zubereitung, der Polyvinylalkohol auf die Flußmittelpaste verdickend wirkt. Die Hafteigenschaften der Polyvinylalkohol enthaltenden Flußmittelpaste sind ebenfalls verbessert.

Die Verwendung von Polyvinylalkohol als Bestandteil von Flußmittelformulierungen hat wie bereits ausgeführt den Vorteil, daß die Tenside, die üblicherweise in der Flußmittelformulierung enthalten sind, substituiert werden können. Polyvinylalkohol ist umweltverträglich und bewirkt keine nachteiligen Reaktionen mit den Flußmittelbestandteilen bzw. den Lötpartnern während des Lötprozesses.

Die nachfolgenden Beispiele sollen die Erfindung erläutern jedoch nicht einschränken.

### Beispiel 1: Herstellung einer Flußmittelsuspension

In einem Behälter wurde entmineralisiertes Wasser vorgelegt. Polyvinylalkoholfolie vom Typ G 6102.090 der Fa. Nordenia wurde unter Rühren im Wasser gelöst. Danach erfolgte die Zugabe von Kaliumfluoraluminat (Nocolok). Die hergestellte Flußmittelsuspension bestand aus:
18% Kaliumfluoraluminat
2 % Polyvinylalkohol
80 % entmineralisiertes Wasser

### Beispiel 2: Lötversuche

Einseitig lotplattierte und unplattierte Aluminiumcoupons mit den Maßen 25 x 25 x 0,4 - 1 mm wurden ca. 30 Sekunden in die homogenisierte Suspension aus Beispiel 1 getaucht und anschließend getrocknet. Die Verteilung des Flußmittels auf den Coupons war homogen. Die Haftung des Flußmittels auf der Oberfläche war gut und wischfest.

Es wurden jeweils 6 Lötungen mit lotplattierten und 6 Lötungen mit unplattierten Aluminiumcoupons durchgeführt. Alle Coupons wurden mit Aluminiumwinkeln verlötet.

Bei den unplattierten Coupons wurde am Winkelende ein 3 - 4 mm langes Lotstück aus AlSi 12 gelegt.

Die Lötversuche wurden im Glas-Lötofen Typ III durchgeführt.

### Lötbedingungen:

| | |
|---|---|
| Permanenter Stickstoffstrom | 11 I/min. |
| Aufheizrate | 30 °C/min. bis zu einer Temperatur von 605 °C |
| Haltezeit bei 605°C | 2 min. |
| Abkühlzeit | 30 °C/min. |

### Ergebnis:

Alle Coupons waren optimal mit den Winkeln verlötet.

## Patentansprüche

1. Flussmittel zum Löten von Teilen aus Aluminium oder Aluminiumlegierungen auf Basis komplexer Alkalimetallfluoride, **dadurch gekennzeichnet, dass** das Flußmittel Polyvinylalkohol und/oder Polyvinylalkoholderivate als wasserlösliches Polymer enthält.

2. Flussmittel nach Anspruch 1, **dadurch gekennzeichnet, dass** es Hilfstoffe wie z. B. Bindemittel oder Dispergierstoffe enthält.

3. Flussmittel nach Anspruch 1, **dadurch gekennzeichnet, dass** das Flussmittel als wasserlösliches Polymer Polyvinylalkohol und/oder Polyvinylalkoholderivate in Mengen von 0,005 bis 10 Gew.% ( bezogen auf die Flußmittelzubereitung) enthält.

4. Flussmittel nach Anspruch 1, **dadurch gekennzeichnet, dass** das Flussmittel in Form einer pastösen Flussmittelzubereitung vorliegt und dass das wasserlösliche Polymer als Granulat oder Pulver in die pastöse Flussmittelzubereitung eingebracht ist.

5. Flussmittel nach Anspruch 1, **dadurch gekennzeichnet, dass** Polyvinylalkohol oder Polyvinylalkoholderivaten als wasserlösliche Folie als Hüllstoff für die Flussmittelzubereitung vorliegt.

6. Verfahren zur Konfektionierung von Flussmitteln zum Löten von Teilen aus Aluminium oder Aluminiumlegierungen, **dadurch gekennzeichnet, dass** ein wasserlösliches Polymer als Hüllstoff für die Flussmittelzubereitung verwendet wird.

7. Verfahren zur Konfektionierung von Flussmitteln nach Anspruch 6, **dadurch gekennzeichnet, dass** eine wasserlösliche Folie aus Polyvinylalkohol oder Polyvinylalkoholderivaten als Hüllstoff für die Flussmittelzubereitung verwendet wird.

8. Verwendung von Flussmittelzubereitungen nach Anspruch 1 bis 7 zum Löten von Bauteilen aus Aluminium oder Aluminiumlegierungen oder zum Löten von Bauteilen aus Aluminium oder Aluminiumlegierungen und geeigneten Materialien z. B. Bauteilen aus Kupfer, Messing, Eisen oder Edelstahl.

## Claims

1. A flux composition for brazing of parts of aluminium or aluminium alloys based on complex alkali metal fluorides, **characterized in that** the flux composition comprises polyvinyl alcohol and/or derivatives of polyvinyl alcohol as water-soluble polymer.

2. Flux composition according to claim 1, **characterized in that** it comprises auxiliaries like, for example, binders or dispersants.

3. Flux composition according to claim 1, **characterized in that** the flux composition comprises polyvinyl alcohol and/or derivatives of polyvinyl alcohol as water-soluble polymer in an amount of from 0.005 to 10% by weight (based on the flux composition).

4. Flux composition according to claim 1, **characterized in that** the flux composition is present in the form of a pasty flux composition and that the water soluble-polymer is introduced into the pasty flux composition as granulate or powder.

5. Flux composition according to claim 1, **characterized in that** the polyvinyl alcohol or derivatives of polyvinyl alcohol are present as water-soluble foil in the form of an envelope for the flux composition.

6. Method of formulating flux compositions for brazing of parts of aluminium or aluminium alloys, **characterized in that** a water-soluble polymer is used as an envelope for the flux composition.

7. Method of formulating flux compositions according to claim 6, **characterized in that** a water-soluble foil of polyvinyl alcohol or derivatives of polyvinyl alcohol is used as envelope for the flux composition.

8. Use of flux compositions according to claims 1 to 7 for brazing of parts of aluminium or aluminium alloys or for brazing of parts of aluminium or aluminium alloys and suitable materials, for example, parts of copper, brass, iron or stainless steel.

## Revendications

1. Fondant pour le brasage de pièces en aluminium ou en alliages d'aluminium à base de fluorures de métal alcalin complexes, **caractérisé en ce que** le fondant contient du poly(alcool vinylique) et/ou des dérivés de poly(alcool vinylique) comme polymère soluble dans l'eau.

2. Fondant selon la revendication 1, **caractérisé en ce qu'**il contient des adjuvants tels que par exemple des liants ou des dispersants.

3. Fondant selon la revendication 1, **caractérisé en ce que** le fondant contient comme polymère soluble dans l'eau du poly(alcool vinylique) et/ou des dérivés de poly(alcool vinylique) en des quantités de 0,005 à 10% en poids (par rapport à la composition de fondant).

4. Fondant selon la revendication 1, **caractérisé en ce que** le fondant se trouve sous forme d'une composition pâteuse de fondant et **en ce que** le polymère soluble dans l'eau est introduit sous forme de granulat ou de poudre dans la composition pâteuse de fondant.

5. Fondant selon la revendication 1, **caractérisé en ce que** le poly(alcool vinylique) ou les dérivés de poly(alcool vinylique) se trouve(nt) sous forme de feuille soluble dans l'eau comme substance d'enrobage pour la composition de fondant.

6. Procédé pour la confection de fondants destinés au brasage de pièces en aluminium ou en alliages d'aluminium, **caractérisé en ce qu'**on utilise un polymère soluble dans l'eau comme substance d'enrobage pour la composition de fondant.

7. Procédé pour la confection de fondants selon la revendication 6, **caractérisé en ce qu'**une feuille soluble dans l'eau en poly(alcool vinylique) ou en dérivés de poly(alcool vinylique) est utilisée comme substance d'enrobage pour la composition de fondant.

8. Utilisation de compositions de fondant selon la revendication 1 à 7 pour le brasage de pièces en aluminium ou alliages d'aluminium ou pour le brasage de pièces en aluminium ou alliages d'aluminium et des matériaux appropriés, par exemple des pièces en cuivre, laiton, fer ou acier spécial.
